# EUROPEAN PATENT APPLICATION

(11) **EP 4 841 903 A1**
(43) Date of publication of application: **18.11.2026**
(21) Application number: 24916033.4
(22) Date of filing: 11.01.2024
(51) Int. Cl.: H04B 7/0456

(54) **CSI FEEDBACK METHODS, TERMINAL DEVICES AND NETWORK DEVICES**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN); LIU, Wendong, Dongguan, Guangdong 523860 (CN)
(74) Representative: Mewburn Ellis LLP
(86) International application number: PCT/CN2024/071808
(87) International publication number: WO 2025/147958

(57) **Abstract**

The disclosure relates to a method for channel state information (CSI) feedback, a terminal device, a network device, a chip, a computer-readable storage medium, a computer program product, a computer program, and a communication system. The method for CSI feedback includes the following. A terminal device determines a first CSI feedback mode, obtains CSI indication information by processing first CSI based on the first CSI feedback mode, and sends the CSI indication information to a network device. In embodiments of the disclosure, correct transmission and parsing of the CSI indication information can be ensured.

## Description

### TECHNICAL FIELD

This disclosure relates to the field of communication, in particular to a method for channel state information (CSI) feedback, a terminal device, a network device, a chip, a computer-readable storage medium, a computer program product, a computer program, and a communication system.

### BACKGROUND

Channel state information (CSI) feedback is very important in a wireless communication system. Generally, CSI feedback in a wireless communication system may include an indication for information such as a channel quality indicator (CQI), a precoding matrix indicator (PMI), a rank indicator (RI), etc. In terms of procedure, a network device may first configure indication parameter information for CSI feedback, where the indication parameter information is, for example, an information type that needs to be indicated to a user equipment (UE), including a CQI, a PMI, an RI, etc. The network device may also configure some reference signals for CSI measurement, and the UE can determine a current CSI condition by measuring the reference signals. The UE indicates determined CSI to the network device, such that the network device can configure a reasonable and efficient data transmission mode based on a current channel condition. It is necessary to consider how to correctly transmit and parse CSI indication information.

### SUMMARY

A method for channel state information (CSI) feedback, a terminal device, a network device, a chip, a computer-readable storage medium, a computer program product, a computer program, and a communication system are provided in embodiments of the disclosure, which can ensure correct transmission and parsing of CSI indication information.

A method for CSI feedback is provided in embodiments of the disclosure. The method includes the following. A terminal device determines a first CSI feedback mode. The terminal device obtains CSI indication information by processing first CSI based on the first CSI feedback mode, and sends the CSI indication information to a network device.

A method for CSI feedback is provided in embodiments of the disclosure. The method includes the following. A network device determines a first CSI feedback mode. The network device receives CSI indication information from a terminal device, and obtains second CSI by processing the CSI indication information based on a decoding mode corresponding to the first CSI feedback mode.

A terminal device is provided in embodiments of the disclosure. The terminal device includes a first processing module and a first communication module. The first processing module is configured to determine a first CSI feedback mode, and obtain CSI indication information by processing first CSI based on the first CSI feedback mode. The first communication module is configured to send the CSI indication information to a network device.

A network device is provided in embodiments of the disclosure. The network device includes a second communication module and a second processing module. The second communication module is configured to receive CSI indication information from a terminal device. The second processing module is configured to determine a first CSI feedback mode, and obtain second CSI by processing the CSI indication information based on a decoding mode corresponding to the first CSI feedback mode.

A terminal device is provided in embodiments of the disclosure. The terminal device includes a transceiver, a processor, and a memory. The memory is configured to store a computer program. The transceiver is configured to communicate with other devices. The processor is configured to invoke and execute the computer program stored in the memory, to cause the terminal device to perform the method for CSI feedback.

A network device is provided in embodiments of the disclosure. The network device includes a transceiver, a processor, and a memory. The memory is configured to store a computer program. The transceiver is configured to communicate with other devices. The processor is configured to invoke and execute the computer program stored in the memory, to cause the network device to perform the method for CSI feedback.

A chip is provided in embodiments of the disclosure. The chip is configured to implement the method for CSI feedback.

Specifically, the chip includes a processor. The processor is configured to invoke and execute a computer program stored in a memory, to cause a device equipped with the chip to perform the method for CSI feedback.

A computer-readable storage medium is provided in embodiments of the disclosure. The computer-readable storage medium is configured to store a computer program which, when executed by a device, causes the device to perform the method for CSI feedback.

A computer program product is provided in embodiments of the disclosure. The computer program product includes computer program instructions that cause a computer to perform the method for CSI feedback.

A computer program is provided in embodiments of the disclosure. The computer program, when executed in a computer, causes the computer to perform the method for CSI feedback.

In embodiments of the disclosure, the terminal device obtains the CSI indication information by processing the first CSI based on the first CSI feedback mode, and the network device obtains the second CSI by processing the CSI indication information based on a decoding mode corresponding to the first CSI feedback mode. Both ends have a consistent understanding in transmission and reception, thereby ensuring correct transmission and parsing of the CSI indication information.

### BRIEF DESCRIPTION OF THE DRAWINGS

FIG. 1 is a schematic diagram illustrating a communication system according to embodiments of the disclosure.
FIG. 2 is a schematic diagram illustrating a basic procedure for channel state information (CSI) feedback.
FIG. 3 is a schematic diagram illustrating a basic structure of a neural network.
FIG. 4 is a schematic diagram illustrating a basic network architecture for CSI indication based on artificial intelligence/machine learning (AI/ML).
FIG. 5 is a schematic flowchart of a method for CSI feedback according to an embodiment of the disclosure.
FIG. 6 is a schematic flowchart of a method for CSI feedback according to another embodiment of the disclosure.
FIG. 7 is an interaction flowchart illustrating an application example of a method for CSI feedback according to embodiments of the disclosure.
FIG. 8 is an interaction flowchart illustrating another application example of a method for CSI feedback according to embodiments of the disclosure.
FIG. 9 is an interaction flowchart illustrating another application example of a method for CSI feedback according to embodiments of the disclosure.
FIG. 10 is an interaction flowchart illustrating another application example of a method for CSI feedback according to embodiments of the disclosure.
FIG. 11 is a schematic block diagram of a terminal device according to an embodiment of the disclosure.
FIG. 12 is a schematic block diagram of a network device according to an embodiment of the disclosure.
FIG. 13 is a schematic block diagram of a communication device according to embodiments of the disclosure.
FIG. 14 is a schematic block diagram of a chip according to embodiments of the disclosure.
FIG. 15 is a schematic block diagram of a communication system according to embodiments of the disclosure.

### DETAILED DESCRIPTION

The following will illustrate technical solutions of embodiments of the disclosure with reference to the accompanying drawings in embodiments of the disclosure.

The technical solutions of embodiments of the disclosure are applicable to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5^{th}-generation (5G) communication system, or other communication systems, etc.

Generally, a traditional communication system generally supports a limited number (quantity) of connections and therefore is easy to implement. However, with the development of communication technology, a mobile communication system will not only support traditional communication but also support, for example, device-to-device (D2D) communication, machine-to-machine (M2M) communication, machine-type communication (MTC), vehicle-to-vehicle (V2V) communication, or vehicle-to-everything (V2X) communication, etc. Embodiments of the disclosure can also be applied to these communication systems.

In an embodiment, the communication system in embodiments of the disclosure may be applied to a carrier aggregation (CA) scenario, or may be applied to a dual connectivity (DC) scenario, or may be applied to a standalone (SA) scenario.

In an embodiment, the communication system in embodiments of the disclosure is applicable to an unlicensed spectrum, and the unlicensed spectrum may be regarded as a shared spectrum. Alternatively, the communication system in embodiments of the disclosure is applicable to a licensed spectrum, and the licensed spectrum may be regarded as a non-shared spectrum.

Various embodiments of the disclosure are illustrated in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), etc.

In embodiments of the disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, or may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

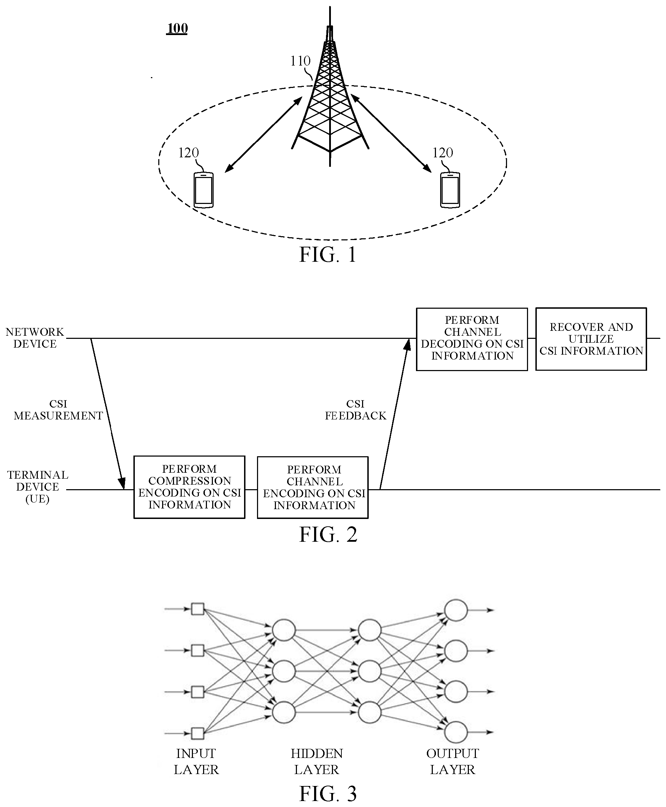

FIG. 1 exemplarily illustrates a communication system 100. The communication system includes one network device 110 and two terminal devices 120. In an embodiment, the communication system 100 may include multiple network devices, and there can be other quantities of terminal devices in the coverage of each network device. Embodiments of the disclosure are not limited in this regard.

It may be understood that, in embodiments of the disclosure, a device with communication functions in a network/system can be referred to as a "communication device". Taking the communication system illustrated in FIG. 1 as an example, the communication device may include the network device and the terminal device(s) that have communication functions. The network device and the terminal device(s) can be specific devices in embodiments of the disclosure and will not be elaborated again herein. The communication device may further include other devices such as a network controller, a mobility management entity, or other network entities in the communication system, and embodiments of the disclosure are not limited in this regard.

It may be understood that, the terms "system" and "network" herein are usually used interchangeably throughout this disclosure. The term "and/or" herein only illustrates an association relationship between associated objects, which means that there can be three relationships. For example, A and/or B can mean A alone, both A and B exist, and B alone. In addition, the character "/" herein generally indicates that the associated objects are in an "or" relationship.

It may be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association between the two, may mean a relationship of indicating and indicated or configuring and configured, etc.

To facilitate understanding of the technical solutions of embodiments of the disclosure, the related art in embodiments of the disclosure will be elaborated below. The following related art, as an optional scheme, can be arbitrarily combined with the technical solutions of embodiments of the disclosure, which shall all belong to the protection scope of embodiments of the disclosure.

### 1. CSI acquisition and indication mode in current wireless communication systems

Performance transmission of multiple-input multiple-output (MIMO) is determined by CSI indication (or feedback) in an LTE system and an NR system. Generally, CSI feedback in existing systems may include an indication for information such as a channel quality indicator (CQI), a precoding matrix indicator (PMI), a rank indicator (RI), etc. FIG. 2 is a schematic diagram illustrating a basic procedure for CSI feedback. A network device (e.g., a base station) may first configure indication parameter information for CSI indication, for example, which information among the CQI, the PMI, the RI, etc., needs to be indicated to a UE. The network device may also configure some reference signals for CSI measurement, and the UE can determine a current CSI condition by measuring the reference signals. In addition, the UE may indicate/feed back determined CSI to the base station, such that the base station can configure a reasonable and efficient data transmission mode based on a current channel condition.

As illustrated in FIG. 2, in the above procedure, the UE needs to perform two encoding-related operations on CSI. The first operation is to encode original channel information to obtain encoded channel information. The first operation is to compress information to be transmitted as much as possible, so as to reduce air interface overhead while ensuring transmission effect, and therefore may also be referred to as compression encoding. The second operation is to perform channel encoding on information to be transmitted, for example, through polar code encoding or low density parity check (LDPC) encoding, such that the information to be transmitted can be better received and recognized by the network device.

### 2. Artificial intelligence (AI)

In recent years, AI research represented by neural networks has made great achievements in many fields, which will also have an important effect on production and life of people for a long time in the future.

FIG. 3 is a schematic diagram illustrating a basic structure of a neural network. As illustrated in FIG. 3, a basic structure of a simple neural network includes: an input layer, a hidden layer, and an output layer. The input layer is responsible for receiving data, the hidden layer is responsible for processing the data, and a final result is generated in the output layer. As illustrated in FIG. 3, each node represents a processing unit, which may be considered as simulating a neuron. Multiple neurons form a layer of a neural network, and information transmission and processing on multiple layers construct a whole neural network.

With the continuous development of neural network research, in recent years, neural network deep learning algorithms have been proposed, and more hidden layers have been introduced. Feature learning is performed through layer-by-layer training of the neural network with multiple hidden layers, which greatly improves learning and processing capabilities of the neural network, and is widely used in applications such as pattern recognition, signal processing, optimized combination, anomaly detection, etc.

### 3. Artificial intelligence/machine learning (AI/ML)-based CSI indication

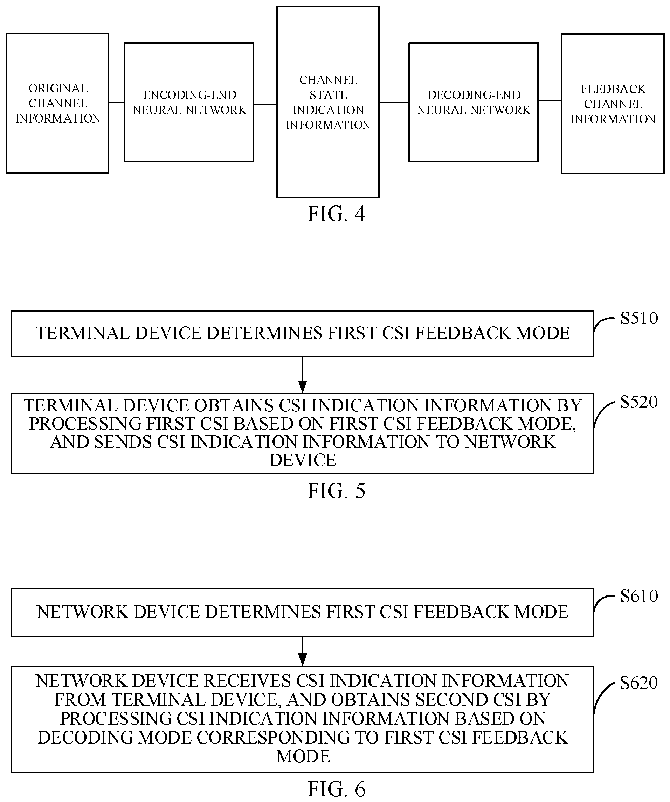

FIG. 4 is a schematic diagram illustrating a basic network architecture for CSI indication based on AI/ML. According to this type of method, an encoding end first generates channel state indication information (CSI indication information) by compressing original channel information through an encoding-end neural network model, and transmits the channel state indication information; and a decoding end generates feedback channel information by recovering the channel state indication information through a decoding-end neural network model, and the feedback channel information is used for recovery of channel quality information.

Current research on AI/ML-based CSI compression and recovery mainly focuses on compression and recovery of the CSI itself. A result after CSI compression is still a part of uplink control information (UCI) or physical uplink shared channel (PUSCH), and needs to be transmitted between a UE and a network through traditional channel encoding. However, essentially, for the transmission of CSI information, it only needs to clearly define what information is to be transmitted and how many bits are actually transmitted over an air interface. As to how many bits the CSI information is first compressed into (e.g., through source encoding or CSI compression encoding), and then how many bits the compressed information is expanded into through channel encoding, such artificially partitioned operations can be entirely avoided. As such, for one thing, a CSI encoding (and decoding) scheme can be simplified. For another thing, by avoiding artificial information partitioning and adopting an encoding scheme that adaptively takes into consideration both information compression and channel encoding capabilities (a decoding scheme that adaptively balances both information recovery and channel decoding capabilities) obtained through AI/ML training, better CSI encoding (and decoding) effects can be achieved.

FIG. 5 is a schematic flowchart of a method for CSI feedback according to an embodiment of the disclosure. Optionally, the method is applicable to the system as illustrated in FIG. 1, but is not limited thereto. The method includes the following.

At S510, a terminal device determines a first CSI feedback mode.

At S520, the terminal device obtains CSI indication information by processing first CSI based on the first CSI feedback mode, and sends the CSI indication information to a network device.

In embodiments of the disclosure, the first CSI may refer to original channel information, which may also be referred to as CSI original information, original CSI information, etc., for example, channel information obtained by the terminal device through measurement of a reference signal; channel information obtained by the terminal device by performing processing, feature extraction, and mathematical transformation on channel information obtained through measurement of a reference signal; and channel information obtained by performing eigenvector decomposition on a channel. The first CSI may also be referred to as CSI original information, original CSI information, etc. The CSI indication information may refer to CSI encoded information, for example, encoded information of *N* bits (*N* is a positive integer), and may also be referred to as CSI encoded information, CSI encoded bits, etc.

In embodiments of the disclosure, the first CSI feedback mode is a CSI feedback mode determined to be used by the terminal device. Optionally, the first CSI feedback mode may be determined by the terminal device from multiple candidate CSI feedback modes, for example, determined based on a preset specification, configuration, or indication. The first CSI feedback mode includes a mode in which the terminal device encodes and/or transmits CSI. Exemplarily, the first CSI feedback mode includes a first type of encoding, where the first type of encoding is used to encode the first CSI into the CSI indication information.

It can be understood that, the first CSI feedback mode determines a procedure for encoding the first CSI into the CSI indication information (e.g., whether channel encoding is required), and/or a representation form of information generated in the procedure, such as the number of bits contained in intermediate information, the number of bits contained in the CSI indication information, etc.

Corresponding to the above method, FIG. 6 is a schematic flowchart of a method for CSI feedback according to another embodiment of the disclosure. Optionally, the method is applicable to the system as illustrated in FIG. 1, but is not limited thereto. The method includes the following.

At S610, a network device determines a first CSI feedback mode.

At S620, the network device receives CSI indication information from a terminal device, and obtains second CSI by processing the CSI indication information based on a decoding mode corresponding to the first CSI feedback mode.

In embodiments of the disclosure, the second CSI is information obtained by the network device through decoding (or recovering) the received CSI indication information. The second CSI may also be referred to as feedback channel information, CSI recovery information, etc.

In embodiments of the disclosure, the decoding mode corresponding to the first CSI feedback mode is used by the network device to decode the CSI indication information into the second CSI. That is, the decoding mode determines a procedure for decoding the CSI indication information into the second CSI (e.g., whether channel decoding is required) and/or a representation form of information generated in the procedure (such as the number of bits contained in intermediate information).

Specifically, the first CSI feedback mode may include a first type of encoding, and the decoding mode corresponding to the first CSI feedback mode includes a first type of decoding corresponding to the first type of encoding. For example, if the first type of encoding does not include channel encoding, the first type of decoding does not include channel decoding. If the first type of encoding includes AI/ML-based CSI compression encoding and AI/ML-based channel encoding, the first type of decoding includes AI/ML-based channel decoding and AI/ML-based CSI compression decoding.

In some embodiments, the first CSI feedback mode is agreed between the terminal device and the network device, or in other words, the first CSI feedback mode is consistently understood by the terminal device and the network device.

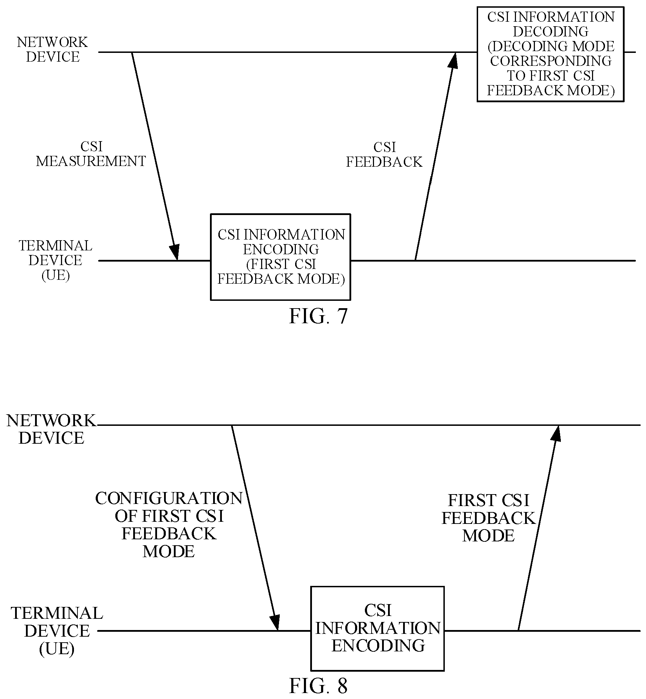

FIG. 7 is an interaction flowchart illustrating an application example of a method for CSI feedback according to an embodiment of the disclosure. According to the embodiment of the disclosure, a terminal device and a network device agree to use a first CSI feedback mode. As illustrated in FIG. 7, the terminal device obtains CSI indication information by performing CSI information encoding on first CSI based on the first CSI feedback mode, and transmits the CSI indication information for CSI feedback. The network device obtains second CSI by performing CSI information decoding through a corresponding decoding mode. Both ends have a consistent understanding in transmission and reception, thereby ensuring correct transmission and parsing of the CSI indication information.

In some embodiments, the first CSI feedback mode may be implemented by using the following mode (1) or mode (2).

Mode (1), the first CSI feedback mode includes CSI compression encoding and/or channel encoding.

CSI compression encoding is an encoding process for compressing channel information. Channel encoding is an encoding process that takes channel characteristics into account, such that information to be transmitted can be better received and recognized by the network side.

According to this mode, the first CSI feedback mode includes independent CSI compression encoding and/or independent channel encoding. For example, the first CSI feedback mode includes concatenation of independent CSI compression encoding and independent channel encoding.

Optionally, CSI compression encoding may be implemented based on AI/ML or other compression modes, for example, based on a codebook.

Optionally, channel encoding may be implemented based on AI/ML or traditional encoding modes such as polar code encoding, LDPC encoding, etc.

Correspondingly, the decoding mode corresponding to the first CSI feedback mode may include channel decoding and/or CSI compression decoding.

Mode (2), joint encoding, where the joint encoding is used for processing the first CSI into CSI indication information that does not require channel encoding.

Specifically, the joint encoding can be used to replace concatenation of CSI compression encoding and channel encoding, i.e., to implement joint encoding of CSI compression encoding and channel encoding. In this way, information subjected to joint encoding does not need further channel encoding.

Since for the transmission of CSI information, it only needs to clearly define what information is to be transmitted and how many bits are actually transmitted over an air interface, as to how many bits the CSI information is first compressed into (e.g., through source encoding or CSI compression encoding), and then how many bits the compressed information is expanded into through channel encoding, such artificially partitioned operations can be entirely avoided. Therefore, adopting joint encoding, for one thing, a CSI encoding (and decoding) scheme can be simplified. For another thing, by avoiding artificial information partitioning and adopting an encoding scheme that adaptively takes into consideration both information compression and channel encoding capabilities (a decoding scheme that adaptively balances both information recovery and channel decoding capabilities) obtained through AI/ML training, better CSI encoding (and decoding) effects can be achieved.

Correspondingly, the decoding mode corresponding to the first CSI feedback mode may include joint decoding, i.e., joint decoding of channel decoding and CSI compression decoding, without requiring independent channel decoding.

In some embodiments, the first CSI feedback mode may be configured by the network device or specified in a protocol.

FIG. 8 is an interaction flowchart illustrating another application example of a method for CSI feedback according to embodiments of the disclosure. As illustrated in FIG. 8, a network device can send configuration information to a terminal device, where the configuration information indicates a configuration of a first CSI feedback mode. That is, the terminal device can determine the first CSI feedback mode as follows. The terminal device receives the configuration information from the network device, and determines the first CSI feedback mode according to the configuration information.

Optionally, the configuration information may be carried in one or more of the following messages: (1) a broadcast message, such as a master information block (MIB), system information block 1 (SIB1), system information block *x* (SIB*x*), etc.; (2) a radio resource control (RRC) message; (3) a medium access control control element (MAC CE); (4) a downlink control information (DCI) message; (5) a downlink message in a random access procedure, such as message B (MsgB), message 2 (Msg2), message 4 (Msg4), etc.; (6) a physical downlink control channel (PDCCH); (7) a physical downlink shared channel (PDSCH); (8) an AI/ML-dedicated downlink channel; and (9) a capability indication of a network device.

Optionally, if the terminal device is unable to support the first CSI feedback mode, the terminal device may send reporting information to the network device, where the reporting information indicates that the first CSI feedback mode is not adopted.

Optionally, if the terminal device is unable to support the first CSI feedback mode, the terminal device may use a second CSI feedback mode. The second CSI feedback mode may be a fallback CSI feedback mode, such as a non-AI/ML scheme, or a traditional CSI feedback mode (e.g., a mode based on a type1 codebook, a type2 codebook, and an enhanced type2 (etype2) codebook, and a corresponding channel encoding mode). Correspondingly, in the case where the network device receives an indication indicative of that the first CSI feedback mode is not adopted, the network device may also fall back to using a decoding mode corresponding to the second CSI feedback mode to process the CSI indication information.

In some embodiments, the method for CSI feedback further includes the following. The terminal device sends first indication information to the network device, where the first indication information indicates at least one CSI feedback mode and/or capability information of the terminal device for the at least one CSI feedback mode, where the at least one CSI feedback mode and/or the capability information is used by the network device to determine the first CSI feedback mode.

Optionally, the capability information of the terminal device for the at least one CSI feedback mode may include: for each of the at least one CSI feedback mode, whether the terminal device supports the CSI feedback mode, whether the terminal device supports the CSI feedback mode under a specific configuration, a degree of support of the terminal device for the CSI feedback mode, etc.

In some embodiments, the at least one CSI feedback mode includes at least one of: a CSI feedback mode requested or recommended by the terminal device; a CSI feedback mode supported by the terminal device; or the first CSI feedback mode.

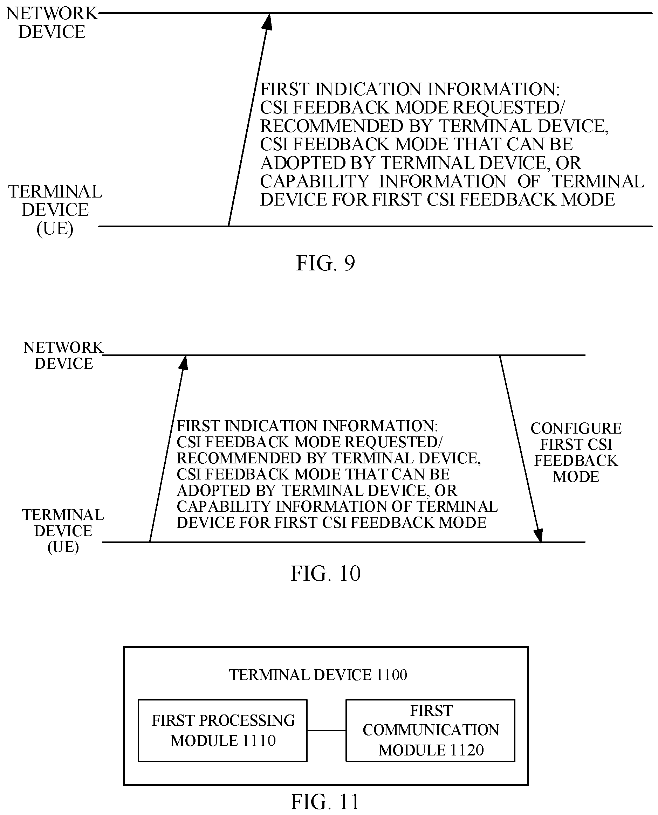

FIG. 9 is an interaction flowchart illustrating another application example of a method for CSI feedback according to embodiments of the disclosure. As illustrated in FIG. 9, a terminal device can send first indication information to a network device, where the first indication information indicates a CSI feedback mode requested/recommended by the terminal device, a CSI feedback mode that can be adopted (supported) by the terminal device, or capability information of the terminal device for a first CSI feedback mode.

Correspondingly, in some embodiments, before the network device processes the CSI indication information based on the decoding mode corresponding to the first CSI feedback mode, the method for CSI feedback further includes the following. The network device receives first indication information from the terminal device, where the first indication information indicates at least one CSI feedback mode and/or capability information of the terminal device for the at least one CSI feedback mode, where the at least one CSI feedback mode and/or the capability information is used by the network device to determine the first CSI feedback mode.

That is, the network device determines the first CSI feedback mode as follows. The network device determines the first CSI feedback mode according to the at least one CSI feedback mode and/or the capability information indicated by the first indication information.

According to the above embodiments, the network device can determine the first CSI feedback mode according to the at least one CSI feedback mode and/or the capability information for the at least one CSI feedback mode indicated by the terminal device, and then configure the first CSI feedback mode for the terminal device and/or process the received CSI indication information by adopting the first CSI feedback mode.

FIG. 10 is an interaction flowchart illustrating another application example of a method for CSI feedback according to embodiments of the disclosure. As illustrated in FIG. 10, a terminal device sends first indication information to a network device, where the first indication information indicates a CSI feedback mode requested/recommended by the terminal device, a CSI feedback mode that can be adopted (supported) by the terminal device, or capability information of the terminal device for a first CSI feedback mode. The network device configures the first CSI feedback mode according to the first indication information.

In an embodiment, the first CSI feedback mode is configured by the terminal device. Specifically, the first indication information may indicate a first CSI feedback mode, and the network device may determine the first CSI feedback mode based on the first indication information, and then process received CSI indication information by adopting a corresponding decoding mode.

In another embodiment, the first indication information may indicate capability information of the terminal device for the first CSI feedback mode, and the network device configures, based on the capability information, the terminal device to use the first CSI feedback mode, and processes received CSI indication information by adopting a corresponding decoding mode.

In another embodiment, the first indication information may indicate a CSI feedback mode requested or recommended by the terminal device and/or capability information of the terminal device for the CSI feedback mode requested or recommended by the terminal device. The network device may determine the first CSI feedback mode according to the first indication information, then configure the first CSI feedback mode for the terminal device, and process received CSI indication information by adopting a corresponding decoding mode.

In another embodiment, the first indication information may indicate one or more CSI feedback modes supported by the terminal device. The network device may determine the first CSI feedback mode from the one or more CSI feedback modes supported by the terminal device, then configure the first CSI feedback mode for the terminal device, and process received CSI indication information by adopting a corresponding decoding mode.

Optionally, the first indication information may be carried in one or more of the following messages: (1) an RRC message; (2) a UCI message; (3) an uplink message in a random access procedure, such as message A (MsgA), message 3 (Msg3), etc.; (4) a physical uplink control channel (PUCCH); (5) a PUSCH; (6) an AI/ML-dedicated uplink channel; and (7) UE capability reporting.

According to the foregoing elaborations, it can be understood that, the first CSI feedback mode may be one of different types of CSI feedback modes, and one or more encoding processes contained in the first CSI feedback mode may also be one of different types of encoding processes (e.g., based on AI/ML or based on a traditional mode). In addition, the determination of the first CSI feedback mode is related to the transmission of the CSI indication information and an information type. Based on this, the first CSI feedback mode may be configured or indicated based on one or more contents. The following exemplarily illustrates content that can be configured or indicated during protocol specification, network configuration, or terminal indication.

In some embodiments, the first CSI feedback mode is configured/indicated based on at least one of the following information A to information D. In other words, determining the first CSI feedback mode includes determining at least one of the following information A to information D.

A. a parameter configuration for the first CSI feedback mode

Exemplarily, the parameter configuration for the first CSI feedback mode includes at least one of the following.

### (a) an identifier (ID) of a CSI encoding type for the first CSI feedback mode

The ID of the CSI encoding type refers to an ID of an overall encoding process in the first CSI feedback mode. The ID of the CSI encoding type may be an ID of a specific type of CSI encoding function, or an ID of a model or algorithm for implementing a specific type of CSI encoding.

Specifically, different CSI encoding functions may correspond to different type IDs. For example, a type ID corresponding to joint encoding is 0, and a type ID corresponding to concatenation of compression encoding and channel encoding is 1. For another example, a type ID corresponding to AI-based joint encoding is 00, a type ID corresponding to concatenation of AI-based compression encoding and AI-based channel encoding is 01, and a type ID corresponding to concatenation of traditional compression encoding and traditional channel encoding is 10.

Optionally, an *M*-bit binary number, an *N*-bit decimal number, etc., may be used as the ID of the CSI encoding type, where *M* and *N* are positive integers.

### (b) a target compression bit for the first CSI feedback mode

Optionally, the target compression bit is the number of bits contained in information output from encoding based on the first CSI feedback mode. For example, if information obtained by encoding the first CSI based on the first CSI feedback mode is a *K*-bit binary number (*K* is a positive integer), the target compression bit is *K*.

### (c) a CSI encoding compression ratio for the first CSI feedback mode

Optionally, the CSI encoding compression ratio is a ratio of the size of information encoded based on the first CSI feedback mode to the size of CSI original information.

### (d) channel information used for transmitting the CSI indication information

Optionally, the channel information used for transmitting the CSI indication information may include a PUCCH or a PUSCH, i.e., the channel information indicates whether the CSI indication information is transmitted over a PUCCH or a PUSCH.

### (e) a resource(s) used for transmitting the CSI indication information

Optionally, the resource(s) may refer to a PUCCH or PUSCH transmission resource(s) required for the CSI indication information, such as a time-domain resource(s), a frequency-domain resource(s), or a code-domain resource(s).

### (f) a resource mapping mode used for transmitting the CSI indication information

Optionally, the resource mapping mode may refer to a resource mapping mode for a PUCCH or PUSCH transmission resource(s) required for the CSI indication information.

### B. a CSI encoding type

Optionally, the CSI encoding type in information B may refer to type information of one or more encoding processes in the first CSI feedback mode.

In some embodiments, the CSI encoding type includes at least one of the following.

### (a) a type of CSI compression encoding and/or a type of channel encoding

Optionally, the CSI encoding type may include a type of channel encoding, such as whether there is channel encoding or a channel encoding mode. The channel encoding mode may be polar code encoding, LDPC encoding, etc., or an AI/ML-based mode or a traditional mode, etc. Optionally, the channel encoding type may also be indicated by a function ID or a model ID.

Optionally, the CSI encoding type may include a type of compression encoding and a type of channel encoding. For example, a type of compression encoding for CSI information is indicated by a function ID or a model ID, and a type of channel encoding for CSI information is indicated by a function ID or a model ID.

(b) a type of joint encoding, where the joint encoding is used for processing the first CSI into CSI indication information that does not require channel encoding

Specifically, the joint encoding may refer to joint encoding of CSI compression and channel encoding.

Optionally, the type of joint encoding may include whether joint encoding is adopted, whether a specific mode-based joint encoding (e.g., AI/ML-based joint encoding) or a specific joint encoding mode is adopted. Optionally, the type of joint encoding may also be indicated by a function ID or a model ID.

(c) a CSI encoding type(s) corresponding to one or more compression bit lengths

A compression bit length refers to the number of bits of information output through CSI encoding. The CSI encoding type(s) corresponding to one or more compression bit lengths can be understood as a CSI encoding type(s) corresponding to a specific compression bit length(s), for example, a compression bit length of 8 and a compression bit length of 10 correspond to different CSI encoding types.

Optionally, the CSI encoding type corresponding to a specific compression bit length may be indicated by a function ID or a model ID.

(d) a CSI encoding type(s) corresponding to one or more compression bit lengths and not requiring channel encoding

Exemplarily, multiple functions/models for joint encoding may be pre-configured, and a different compression bit length may correspond to a different function/model. Optionally, a CSI encoding type corresponding to a specific compression bit length and not requiring channel encoding may be indicated by a function ID or a model ID.

(e) second indication information, where the second indication information indicates that channel encoding is not required

Optionally, the second indication information may be a specific function ID or a specific model ID. When configuration information or indication information for the first CSI feedback mode contains the second indication information, the terminal device can determine that channel encoding on the CSI indication information is not required, and the network device also does not need to perform channel decoding on the CSI indication information.

### C. a transmission type for the CSI indication information

In some embodiments, the transmission type for the CSI indication information includes at least one of the following.

(a) a channel encoding type for UCI used for transmitting the CSI indication information

For example, the UCI does not require channel encoding (correspondingly, the network device does not need to perform channel decoding on the UCI), or the UCI adopts a specific type of channel encoding mode (correspondingly, the network device adopts a corresponding channel decoding mode).

(b) whether the UCI used for transmitting the CSI indication information contains other information other than the CSI indication information

For example, the CSI indication information may share single UCI with other information, or may be carried in a separate UCI. Sharing single UCI with other information and being carried in a separate UCI are different transmission types, which can be represented by different IDs.

(c) a channel encoding type for a PUSCH used for transmitting the CSI indication information

For example, the PUSCH does not require channel encoding, or the PUSCH adopts a specific type of channel encoding mode.

### D. a CSI information type

In some embodiments, the CSI information type includes at least one of: (a) feedback precision for the CSI indication information; (b) a feedback overhead size for the CSI indication information, e.g., the size of the number of bits for feedback; (c) a time-domain configuration requirement for the CSI indication information, e.g., periodic configuration, semi-static configuration, triggered configuration, etc.; or (d) a latency requirement for the CSI indication information.

It can be understood that, the above CSI information types impose different transmission requirements on the CSI indication information to be transmitted. Therefore, a different CSI information type can correspond to a different CSI feedback mode, i.e., the CSI feedback mode can be determined based on the CSI information type, and the first CSI feedback mode can be configured/indicated by indicating the CSI information type.

In some embodiments, the CSI information type is used for determining at least one of: the parameter configuration for the first CSI feedback mode, the CSI encoding type, or the transmission type for the CSI indication information. For example, for a first CSI information type, channel encoding is not adopted; and for a second CSI information type, joint encoding of CSI information compression and channel encoding is adopted.

Exemplarily, the channel encoding type can be determined according to the feedback overhead size. For example, when the feedback overhead size is greater than a first reference bit number, joint encoding of CSI information compression and channel encoding is adopted (correspondingly, joint decoding is adopted at a receiving end). For example, when the feedback overhead size is greater than a second reference bit number, channel encoding is not adopted (correspondingly, channel decoding is not adopted at the receiving end). For example, when the feedback overhead size is less than a third reference bit number, joint encoding of CSI information compression and channel encoding is adopted (correspondingly, joint decoding is adopted at the receiving end). For example, when the feedback overhead size is less than a fourth reference bit number, channel encoding is not adopted (correspondingly, channel decoding is not adopted at the receiving end). For example, when the feedback overhead size is equal to a fifth reference bit number, joint encoding of CSI information compression and channel encoding is adopted (correspondingly, joint decoding is adopted at the receiving end). For example, when the feedback overhead size is equal to a sixth reference bit number, channel encoding is not adopted (correspondingly, channel decoding is not adopted at the receiving end). Some or all of the first reference bit number, the second reference bit number, the third reference bit number, the fourth reference bit number, the fifth reference bit number, and the sixth reference bit number may be the same or different.

It may be noted that, the above illustrates examples of determining the channel encoding type according to the feedback overhead size. Optionally, other information in the parameter configuration for the first CSI feedback mode, the CSI encoding type, and the transmission type for the CSI indication information can also be determined according to the feedback overhead size, or other information in the parameter configuration for the first CSI feedback mode, the CSI encoding type, and the transmission type for the CSI indication information can be determined according to other information in the CSI information type (such as one or more of feedback precision, a time-domain configuration requirement, and a latency requirement). In practical applications, the above information may be arbitrarily combined according to scenario requirements, system specifications, network configurations, etc., which is not limited in the disclosure. In addition, configuration content for the first CSI feedback mode may also be implemented based on one or a combination of information A to information D mentioned above. Each of information A to information D may also contain one or a combination of multiple information. The disclosure does not limit in this regard, and specific implementations may be based on scenario requirements, system specifications, network configurations, etc.

It can be seen that, embodiments of the disclosure provide a specific scheme for determining a CSI feedback mode, which is mainly used to have a consistent understanding in transmission and reception. Embodiments of the disclosure are applicable to scenarios where a system can support multiple CSI feedback modes, such as scenarios supporting joint encoding and traditional CSI feedback. In such scenarios, it is necessary to consider that CSI feedback, as a two-end processing scheme, requires the terminal device and the network device to maintain a consistent understanding of a processing behavior of CSI information. That is, if one end performs joint encoding of information compression and channel adaptation on CSI information, the other end also needs to adopt a corresponding decoding mode. If one end does not perform independent channel encoding on CSI information, the other end does not need to perform independent channel decoding on the received CSI information. Otherwise, an inconsistent understanding of an encoding/decoding scheme between the two ends may cause erroneous reception of CSI information. To address the above problem, in the method for CSI feedback in embodiments of the disclosure, the network device and the terminal device ensure a consistent understanding of the first CSI feedback mode through necessary specifications, configurations, indications, and request information, thereby ensuring correct CSI feedback.

FIG. 11 is a schematic block diagram of a terminal device 1100 according to an embodiment of the disclosure. The terminal device 1100 may include a first processing module 1110 and a first communication module 1120. The first processing module 1110 is configured to determine a first CSI feedback mode, and obtain CSI indication information by processing first CSI based on the first CSI feedback mode. The first communication module 1120 is configured to send the CSI indication information to a network device.

In some embodiments, the first CSI feedback mode is agreed with the network device.

Exemplarily, the first CSI may include channel information obtained by the terminal device through measurement of a reference signal; channel information obtained by the terminal device by performing processing, feature extraction, and mathematical transformation on channel information obtained through measurement of a reference signal; or channel information obtained by the terminal device by performing eigenvector decomposition on a channel. The first CSI may also be referred to as CSI original information, original CSI information, etc.

In some embodiments, the first CSI feedback mode is configured by the network device.

In some embodiments, the first communication module 1110 is further configured to send first indication information to the network device, where the first indication information indicates at least one CSI feedback mode and/or capability information of the terminal device for the at least one CSI feedback mode, where the at least one CSI feedback mode and/or the capability information is used by the network device to determine the first CSI feedback mode.

In some embodiments, the at least one CSI feedback mode includes at least one of: a CSI feedback mode requested or recommended by the terminal device; a CSI feedback mode supported by the terminal device; or the first CSI feedback mode.

In some embodiments, the first CSI feedback mode is specified in a protocol.

In some embodiments, the first CSI feedback mode is configured based on at least one of: a parameter configuration for the first CSI feedback mode; a CSI encoding type; a transmission type for the CSI indication information; or a CSI information type.

In some embodiments, the parameter configuration for the first CSI feedback mode includes at least one of: an ID of the CSI encoding type for the first CSI feedback mode; a target compression bit for the first CSI feedback mode; a CSI encoding compression ratio for the first CSI feedback mode; channel information used for transmitting the CSI indication information; a resource used for transmitting the CSI indication information; or a resource mapping mode used for transmitting the CSI indication information.

In some embodiments, the CSI encoding type includes at least one of: a type of CSI compression encoding and/or a type of channel encoding; a type of joint encoding, where the joint encoding is used for processing the first CSI into CSI indication information that does not require channel encoding; a CSI encoding type(s) corresponding to one or more compression bit lengths; a CSI encoding type (s)corresponding to one or more compression bit lengths and not requiring channel encoding; or second indication information, where the second indication information indicates that channel encoding is not required.

In some embodiments, the transmission type for the CSI indication information includes at least one of: a channel encoding type for UCI used for transmitting the CSI indication information; whether the UCI contains other information other than the CSI indication information; or a channel encoding type for a PUSCH used for transmitting the CSI indication information.

In some embodiments, the CSI information type includes at least one of: feedback precision for the CSI indication information; a feedback overhead size for the CSI indication information; a time-domain configuration requirement for the CSI indication information; or a latency requirement for the CSI indication information.

In some embodiments, the CSI information type is used for determining at least one of: the parameter configuration for the first CSI feedback mode, the CSI encoding type, or the transmission type for the CSI indication information.

In some embodiments, the first CSI feedback mode includes: CSI compression encoding and/or channel encoding; or joint encoding, where the joint encoding is used for processing the first CSI into CSI indication information that does not require channel encoding.

The terminal device 1100 in embodiments of the disclosure can implement corresponding functions of the terminal device in the foregoing method embodiments. For the procedure, function, implementation, and advantage corresponding to each module (sub-module, unit, or assembly, etc.) in the terminal device 1100, reference can be made to the corresponding illustrations in the foregoing method embodiments, which will not be elaborated again herein. It may be noted that, the functions of various modules (sub-modules, units, or assemblies, etc.) in the terminal device 1100 mentioned in embodiments of the disclosure may be implemented by different modules (sub-modules, units, or assemblies, etc.), or may be implemented by the same module (sub-module, unit, or assembly, etc.).

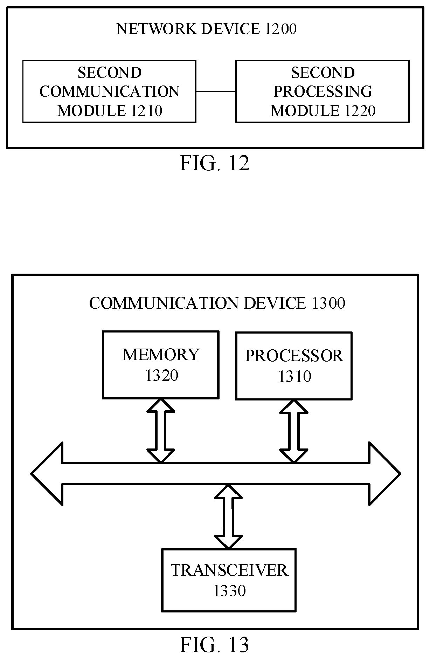

FIG. 12 is a schematic block diagram of a network device 1200 according to an embodiment of the disclosure. The network device 1200 may include a second communication module 1210 and a second processing module 1220. The second communication module 1210 is configured to receive CSI indication information from a terminal device. The second processing module 1220 is configured to determine a first CSI feedback mode, and obtain second CSI by processing the CSI indication information based on a decoding mode corresponding to the first CSI feedback mode.

In some embodiments, the first CSI feedback mode is configured by the network device.

In some embodiments, the second communication module 1220 is further configured to receive first indication information from the terminal device, where the first indication information indicates at least one CSI feedback mode and/or capability information of the terminal device for the at least one CSI feedback mode, where the at least one CSI feedback mode and/or the capability information is used by the network device to determine the first CSI feedback mode.

In some embodiments, the at least one CSI feedback mode includes at least one of: a CSI feedback mode requested or recommended by the terminal device; a CSI feedback mode supported by the terminal device; or the first CSI feedback mode.

In some embodiments, the first CSI feedback mode is specified in a protocol.

In some embodiments, the first CSI feedback mode is configured based on at least one of: a parameter configuration for the first CSI feedback mode; a CSI encoding type; a transmission type for the CSI indication information; or a CSI information type.

In some embodiments, the parameter configuration for the first CSI feedback mode includes at least one of: an ID of the CSI encoding type for the first CSI feedback mode; a target compression bit for the first CSI feedback mode; a CSI encoding compression ratio for the first CSI feedback mode; channel information used for transmitting the CSI indication information; a resource used for transmitting the CSI indication information; or a resource mapping mode used for transmitting the CSI indication information.

In some embodiments, the CSI encoding type includes at least one of: a type of CSI compression encoding and/or a type of channel encoding; a type of joint encoding, where the joint encoding is used for processing the first CSI into CSI indication information that does not require channel encoding; a CSI encoding type(s) corresponding to one or more compression bit lengths; a CSI encoding type(s) corresponding to one or more compression bit lengths and not requiring channel encoding; or second indication information, where the second indication information indicates that channel encoding is not required.

In some embodiments, the transmission type for the CSI indication information includes at least one of: a channel encoding type for UCI used for transmitting the CSI indication information; whether the UCI contains other information other than the CSI indication information; or a channel encoding type for a PUSCH used for transmitting the CSI indication information.

In some embodiments, the CSI information type includes at least one of: feedback precision for the CSI indication information; a feedback overhead size for the CSI indication information; a time-domain configuration requirement for the CSI indication information; or a latency requirement for the CSI indication information.

In some embodiments, the CSI information type is used for determining at least one of: the parameter configuration for the first CSI feedback mode, the CSI encoding type, or the transmission type for the CSI indication information. For example, the feedback overhead size may be used for determining the channel encoding type.

In some embodiments, the first CSI feedback mode includes: CSI compression encoding and/or channel encoding; or joint encoding, where the joint encoding is used for processing the first CSI into CSI indication information that does not require channel encoding.

The network device 1200 in embodiments of the disclosure can implement corresponding functions of the terminal device in the foregoing method embodiments. For the procedure, function, implementation, and advantage corresponding to each module (sub-module, unit, or assembly, etc.) in the network device 1200, reference can be made to the corresponding illustrations in the foregoing method embodiments, which will not be elaborated again herein. It may be noted that, the functions of various modules (sub-modules, units, or assemblies, etc.) in the network device 1200 mentioned in embodiments of the disclosure may be implemented by different modules (sub-modules, units, or assemblies, etc.), or may be implemented by the same module (sub-module, unit, or assembly, etc.).

FIG. 13 is a schematic structural diagram of a communication device 1300 provided in embodiments of the disclosure. The communication device 1300 includes a processor 1310, where the processor 1310 can invoke and execute a computer program stored in a memory, to cause the communication device 1300 to implement the method in embodiments of the disclosure.

In an embodiment, the communication device 1300 may further include a memory 1320. The processor 1310 can invoke and execute a computer program stored in the memory 1320, to cause the communication device 1300 to implement the method in embodiments of the disclosure.

The memory 1320 may be a separate device independent of the processor 1310, or may be integrated into the processor 1310.

In an embodiment, the communication device 1300 may further include a transceiver 1330. The processor 1310 may control the transceiver 1330 to communicate with other devices. Specifically, the processor 1310 may control the transceiver 1330 to send information or data to, or receive information or data from, other devices.

The transceiver 1330 may include a transmitter and a receiver. The transceiver 1330 may further include one or more antennas.

In an embodiment, the communication device 1300 may specifically be the network device in embodiments of the disclosure, and the communication device 1300 may implement corresponding operations implemented by the network device in various methods in embodiments of the disclosure, which will not be repeated herein for the sake of brevity.

In an embodiment, the communication device 1300 may specifically be the terminal device in embodiments of the disclosure, and the communication device 1300 may implement corresponding operations implemented by the terminal device in various methods in embodiments of the disclosure, which will not be repeated herein for the sake of brevity.

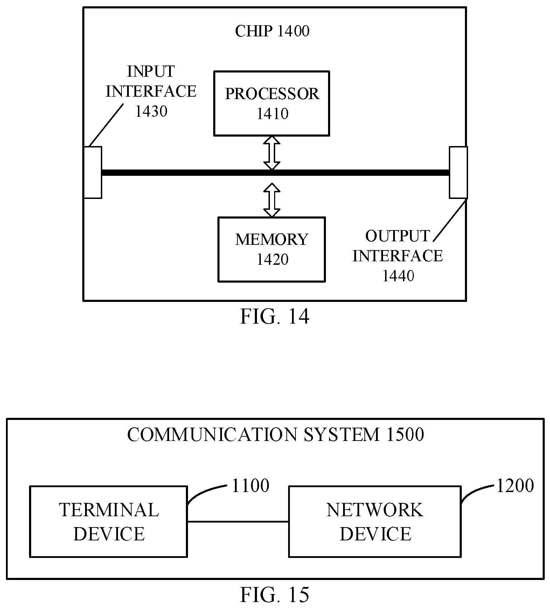

FIG. 14 is a schematic structural diagram of a chip provided in embodiments of the disclosure. The chip 1400 includes a processor 1410, where the processor 1410 can invoke and execute a computer program stored in a memory to implement the method in embodiments of the disclosure.

In an embodiment, the chip 1400 may further include a memory 1420. The processor 1410 can invoke and execute a computer program stored in the memory 1420, to implement the method performed by the terminal device or the network device in embodiments of the disclosure.

The memory 1420 may be a separate device independent of the processor 1410, or may be integrated into the processor 1410.

In an embodiment, the chip 1400 may further include an input interface 1430. The processor 1410 may control the input interface 1430 to communicate with other devices or chips. Specifically, the processor 1410 can obtain information or data sent by other devices or chips.

In an embodiment, the chip 1400 may further include an output interface 1440. The processor 1410 may control the output interface 1440 to communicate with other devices or chips. Specifically, the processor 1410 may output information or data to other devices or chips.

In an embodiment, the chip is applicable to the network device in embodiments of the disclosure, and the chip may implement the corresponding operations performed by the network device in various methods of embodiments of the disclosure. For the sake of brevity, such details are not repeated herein.

In an embodiment, the chip is applicable to the terminal device in embodiments of the disclosure, and the chip may implement the corresponding operations performed by the terminal device in various methods of embodiments of the disclosure. For the sake of brevity, such details are not repeated herein.

The chips applicable to the network device and the terminal device may be the same or different.

It may be understood that, the chip in embodiments of the disclosure may also be referred to as a system-level chip, a system chip, a chip system, or a system-on-chip (SOC).

The processor may be a general-purpose processor, a digital signal processor (DSP), a field programmable gate array (FPGA), an application-specific integrated circuit (ASIC), or other programmable logic devices, discrete gates or transistor logic devices, or discrete hardware components. The general-purpose processor may be a microprocessor, any traditional processor, etc.

The memory may be a volatile memory or a non-volatile memory, or may include both the volatile memory and the non-volatile memory. The non-volatile memory may be a read-only memory (ROM), a programmable read-only memory (PROM), an erasable PROM (EPROM), an electrically EPROM (EEPROM), or a flash memory. The volatile memory can be a random access memory (RAM).

It may be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM), etc. In other words, the memory in embodiments of the disclosure is intended to include, but is not limited to, these and any other suitable types of memory.

FIG. 15 is a schematic block diagram of a communication system 1500 according to embodiments of the disclosure. The communication system 1500 includes a terminal device 1100 and a network device 1200. The terminal device 1100 is configured to determine first CSI feedback mode, obtain CSI indication information by processing first CSI based on the first CSI feedback mode, and send the CSI indication information to the network device. The network device 1200 is configured to receive the CSI indication information from the terminal device, and obtain second CSI by processing the CSI indication information based on a decoding mode corresponding to the first CSI feedback mode.

The terminal device 1100 may be configured to implement corresponding functions implemented by the terminal device in the foregoing method, and the network device 1200 may be configured to implement corresponding functions implemented by the network device in the foregoing method, which will not be elaborated again herein for the sake of brevity.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of embodiments of the disclosure are performed. The computer can be a general-purpose computer, a special-purpose computer, a computer network, or other programmable apparatus. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device, such as a server, a data center, or the like, which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It may be understood that, in various embodiments of the disclosure, the magnitude of a sequence number of each process does not mean an order of execution, and the order of execution of each process may be determined by its function and an internal logic, and shall not constitute any limitation to the implementation of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A method for channel state information (CSI) feedback, comprising:
determining, by a terminal device, a first CSI feedback mode; and
obtaining, by the terminal device, CSI indication information by processing first CSI based on the first CSI feedback mode, and sending, by the terminal device, the CSI indication information to a network device.

2. The method of claim 1, wherein the first CSI feedback mode is configured by the network device.

3. The method of claim 1 or 2, further comprising:
sending, by the terminal device, first indication information to the network device, wherein the first indication information indicates at least one CSI feedback mode and/or capability information of the terminal device for the at least one CSI feedback mode, wherein the at least one CSI feedback mode and/or the capability information is used by the network device to determine the first CSI feedback mode.

4. The method of claim 3, wherein the at least one CSI feedback mode comprises at least one of:
a CSI feedback mode requested or recommended by the terminal device;
a CSI feedback mode supported by the terminal device; or
the first CSI feedback mode.

5. The method of claim 1, wherein the first CSI feedback mode is specified in a protocol.

6. The method of any one of claims 1 to 5, wherein the first CSI feedback mode is configured based on at least one of:
a parameter configuration for the first CSI feedback mode;
an CSI encoding type;
a transmission type for the CSI indication information; or
a CSI information type.

7. The method of claim 6, wherein the parameter configuration for the first CSI feedback mode comprises at least one of:
an identifier (ID) of the CSI encoding type for the first CSI feedback mode;
a target compression bit for the first CSI feedback mode;
a CSI encoding compression ratio for the first CSI feedback mode;
channel information used for transmitting the CSI indication information;
a resource used for transmitting the CSI indication information; or
a resource mapping mode used for transmitting the CSI indication information.

8. The method of claim 6 or 7, wherein the CSI encoding type comprises at least one of:
a type of CSI compression encoding and/or a type of channel encoding;
a type of joint encoding, wherein the joint encoding is used for processing the first CSI into CSI indication information that does not require channel encoding;
a CSI encoding type corresponding to one or more compression bit lengths;
a CSI encoding type corresponding to one or more compression bit lengths and not requiring channel encoding; or
second indication information, wherein the second indication information indicates that channel encoding is not required.

9. The method of any one of claims 6 to 8, wherein the transmission type for the CSI indication information comprises at least one of:
a channel encoding type for uplink control information (UCI) used for transmitting the CSI indication information;
whether the UCI contains other information other than the CSI indication information; or
a channel encoding type for a physical uplink shared channel (PUSCH) used for transmitting the CSI indication information.

10. The method of any one of claims 6 to 9, wherein the CSI information type comprises at least one of:
feedback precision for the CSI indication information;
a feedback overhead size for the CSI indication information;
a time-domain configuration requirement for the CSI indication information; or
a latency requirement for the CSI indication information.

11. The method of any one of claims 6 to 10, wherein the CSI information type is used for determining at least one of: the parameter configuration for the first CSI feedback mode, the CSI encoding type, or the transmission type for the CSI indication information.

12. The method of any one of claims 1 to 11, wherein the first CSI feedback mode comprises:
CSI compression encoding and/or channel encoding; or
joint encoding, wherein the joint encoding is used for processing the first CSI into CSI indication information that does not require channel encoding.

13. A method for channel state information (CSI) feedback, comprising:
determining, by a network device, a first CSI feedback mode; and
receiving, by the network device, CSI indication information from a terminal device, and obtaining, by the network device, second CSI by processing the CSI indication information based on a decoding mode corresponding to the first CSI feedback mode.

14. The method of claim 13, wherein the first CSI feedback mode is configured by the network device.

15. The method of claim 13 or 14, further comprising:
receiving, by the network device, first indication information from the terminal device, wherein the first indication information indicates at least one CSI feedback mode and/or capability information of the terminal device for the at least one CSI feedback mode, wherein the at least one CSI feedback mode and/or the capability information is used by the network device to determine the first CSI feedback mode.

16. The method of claim 15, wherein the at least one CSI feedback mode comprises at least one of:
a CSI feedback mode requested or recommended by the terminal device;
a CSI feedback mode supported by the terminal device; or
the first CSI feedback mode.

17. The method of claim 13, wherein the first CSI feedback mode is specified in a protocol.

18. The method of any one of claims 13 to 17, wherein the first CSI feedback mode is configured based on at least one of:
a parameter configuration for the first CSI feedback mode;
a CSI encoding type;
a transmission type for the CSI indication information; or
a CSI information type.

19. The method of claim 18, wherein the parameter configuration for the first CSI feedback mode comprises at least one of:
an identifier (ID) of the CSI encoding type for the first CSI feedback mode;
a target compression bit for the first CSI feedback mode;
a CSI encoding compression ratio for the first CSI feedback mode;
channel information used for transmitting the CSI indication information;
a resource used for transmitting the CSI indication information; or
a resource mapping mode used for transmitting the CSI indication information.

20. The method of claim 18 or 19, wherein the CSI encoding type comprises at least one of:
a type of CSI compression encoding and/or a type of channel encoding;
a type of joint encoding, wherein the joint encoding is used for processing CSI original information into CSI indication information that does not require channel encoding;
a CSI encoding type corresponding to one or more compression bit lengths;
a CSI encoding type corresponding to one or more compression bit lengths and not requiring channel encoding; or
second indication information, wherein the second indication information indicates that channel encoding is not required.

21. The method of any one of claims 18 to 20, wherein the transmission type for the CSI indication information comprises at least one of:
a channel encoding type for uplink control information (UCI) used for transmitting the CSI indication information;
whether the UCI contains other information other than the CSI indication information; or
a channel encoding type for a physical uplink shared channel (PUSCH) used for transmitting the CSI indication information.

22. The method of any one of claims 18 to 21, wherein the CSI information type comprises at least one of:
feedback precision for the CSI indication information;
a feedback overhead size for the CSI indication information;
a time-domain configuration requirement for the CSI indication information; or
a latency requirement for the CSI indication information.

23. The method of any one of claims 18 to 22, wherein the CSI information type is used for determining at least one of: the parameter configuration for the first CSI feedback mode, the CSI encoding type, or the transmission type for the CSI indication information.

24. The method of any one of claims 13 to 23, wherein the first CSI feedback mode comprises:
CSI compression encoding and/or channel encoding; or
joint encoding, wherein the joint encoding is used for processing CSI original information into CSI indication information that does not require channel encoding.

25. A terminal device, comprising:
a first processing module configured to determine a first channel state information (CSI) feedback mode, and obtain CSI indication information by processing first CSI based on the first CSI feedback mode; and
a first communication module configured to send the CSI indication information to a network device.

26. The terminal device of claim 25, wherein the first CSI feedback mode is configured by the network device.

27. The terminal device of claim 25 or 26, wherein the first communication module is further configured to:
send first indication information to the network device, wherein the first indication information indicates at least one CSI feedback mode and/or capability information of the terminal device for the at least one CSI feedback mode, wherein the at least one CSI feedback mode and/or the capability information is used by the network device to determine the first CSI feedback mode.

28. The terminal device of claim 27, wherein the at least one CSI feedback mode comprises at least one of:
a CSI feedback mode requested or recommended by the terminal device;
a CSI feedback mode supported by the terminal device; or
the first CSI feedback mode.

29. The terminal device of claim 25, wherein the first CSI feedback mode is specified in a protocol.

30. The terminal device of any one of claims 25 to 29, wherein the first CSI feedback mode is configured based on at least one of:
a parameter configuration for the first CSI feedback mode;
a CSI encoding type;
a transmission type for the CSI indication information; or
a CSI information type.

31. The terminal device of claim 30, wherein the parameter configuration for the first CSI feedback mode comprises at least one of:
an identifier (ID) of the CSI encoding type for the first CSI feedback mode;
a target compression bit for the first CSI feedback mode;
a CSI encoding compression ratio for the first CSI feedback mode;
channel information used for transmitting the CSI indication information;
a resource used for transmitting the CSI indication information; or
a resource mapping mode used for transmitting the CSI indication information.

32. The terminal device of claim 30 or 31, wherein the CSI encoding type comprises at least one of:
a type of CSI compression encoding and/or a type of channel encoding;
a type of joint encoding, wherein the joint encoding is used for processing the first CSI into CSI indication information that does not require channel encoding;
a CSI encoding type corresponding to one or more compression bit lengths;
a CSI encoding type corresponding to one or more compression bit lengths and not requiring channel encoding; or
second indication information, wherein the second indication information indicates that channel encoding is not required.

33. The terminal device of any one of claims 30 to 32, wherein the transmission type for the CSI indication information comprises at least one of:
a channel encoding type for uplink control information (UCI) used for transmitting the CSI indication information;
whether the UCI contains other information other than the CSI indication information; or
a channel encoding type for a physical uplink shared channel (PUSCH) used for transmitting the CSI indication information.

34. The terminal device of any one of claims 30 to 33, wherein the CSI information type comprises at least one of:
feedback precision for the CSI indication information;
a feedback overhead size for the CSI indication information;
a time-domain configuration requirement for the CSI indication information; or
a latency requirement for the CSI indication information.

35. The terminal device of any one of claims 30 to 34, wherein the CSI information type is used for determining at least one of: the parameter configuration for the first CSI feedback mode, the CSI encoding type, or the transmission type for the CSI indication information.

36. The terminal device of any one of claims 25 to 35, wherein the first CSI feedback mode comprises:
CSI compression encoding and/or channel encoding; or
joint encoding, wherein the joint encoding is used for processing the first CSI into CSI indication information that does not require channel encoding.

37. A network device, comprising:
a second communication module configured to receive channel state information (CSI) indication information from a terminal device; and
a second processing module configured to determine a first CSI feedback mode, and obtain second CSI by processing the CSI indication information based on a decoding mode corresponding to the first CSI feedback mode.

38. The network device of claim 37, wherein the first CSI feedback mode is configured by the network device.

39. The network device of claim 37 or 38, wherein the second communication module is further configured to:
receive first indication information from the terminal device, wherein the first indication information indicates at least one CSI feedback mode and/or capability information of the terminal device for the at least one CSI feedback mode, wherein the at least one CSI feedback mode and/or the capability information is used by the network device to determine the first CSI feedback mode.

40. The network device of claim 39, wherein the at least one CSI feedback mode comprises at least one of:
a CSI feedback mode requested or recommended by the terminal device;
a CSI feedback mode supported by the terminal device; or
the first CSI feedback mode.

41. The network device of claim 37, wherein the first CSI feedback mode is specified in a protocol.

42. The network device of any one of claims 37 to 41, wherein the first CSI feedback mode is configured based on at least one of:
a parameter configuration for the first CSI feedback mode;
a CSI encoding type;
a transmission type for the CSI indication information; or
a CSI information type.

43. The network device of claim 42, wherein the parameter configuration for the first CSI feedback mode comprises at least one of:
an identifier (ID) of the CSI encoding type for the first CSI feedback mode;
a target compression bit for the first CSI feedback mode;
a CSI encoding compression ratio for the first CSI feedback mode;
channel information used for transmitting the CSI indication information;
a resource used for transmitting the CSI indication information; or
a resource mapping mode used for transmitting the CSI indication information.

44. The network device of claim 42 or 43, wherein the CSI encoding type comprises at least one of:
a type of CSI compression encoding and/or a type of channel encoding;
a type of joint encoding, wherein the joint encoding is used for processing CSI original information into CSI indication information that does not require channel encoding;
a CSI encoding type corresponding to one or more compression bit lengths;
a CSI encoding type corresponding to one or more compression bit lengths and not requiring channel encoding; or
second indication information, wherein the second indication information indicates that channel encoding is not required.

45. The network device of any one of claims 42 to 44, wherein the transmission type for the CSI indication information comprises at least one of:
a channel encoding type for uplink control information (UCI) used for transmitting the CSI indication information;
whether the UCI contains other information other than the CSI indication information; or
a channel encoding type for a physical uplink shared channel (PUSCH) used for transmitting the CSI indication information.

46. The network device of any one of claims 42 to 45, wherein the CSI information type comprises at least one of:
feedback precision for the CSI indication information;
a feedback overhead size for the CSI indication information;
a time-domain configuration requirement for the CSI indication information; or
a latency requirement for the CSI indication information.

47. The network device of any one of claims 42 to 46, wherein the CSI information type is used for determining at least one of: the parameter configuration for the first CSI feedback mode, the CSI encoding type, or the transmission type for the CSI indication information.

48. The network device of any one of claims 37 to 47, wherein the first CSI feedback mode comprises:
CSI compression encoding and/or channel encoding; or
joint encoding, wherein the joint encoding is used for processing CSI original information into CSI indication information that does not require channel encoding.

49. A terminal device, comprising:
a memory configured to store a computer program;
a transceiver configured to communicate with other devices; and
a processor configured to invoke and execute the computer program stored in the memory, to cause the terminal device to determine a first channel state information (CSI) feedback mode, obtain CSI indication information by processing first CSI based on the first CSI feedback mode, and send the CSI indication information to a network device.

50. The terminal device of claim 49, wherein the first CSI feedback mode is configured by the network device.

51. The terminal device of claim 49 or 50, wherein the processor is further configured to cause the terminal device to send first indication information to the network device, wherein the first indication information indicates at least one CSI feedback mode and/or capability information of the terminal device for the at least one CSI feedback mode, wherein the at least one CSI feedback mode and/or the capability information is used by the network device to determine the first CSI feedback mode.

52. The terminal device of claim 51, wherein the at least one CSI feedback mode comprises at least one of:
a CSI feedback mode requested or recommended by the terminal device;
a CSI feedback mode supported by the terminal device; or
the first CSI feedback mode.

53. The terminal device of claim 49, wherein the first CSI feedback mode is specified in a protocol.

54. The terminal device of any one of claims 49 to 53, wherein the first CSI feedback mode is configured based on at least one of:
a parameter configuration for the first CSI feedback mode;
a CSI encoding type;
a transmission type for the CSI indication information; or
a CSI information type.

55. The terminal device of claim 54, wherein the parameter configuration for the first CSI feedback mode comprises at least one of:
an identifier (ID) of the CSI encoding type for the first CSI feedback mode;
a target compression bit for the first CSI feedback mode;
a CSI encoding compression ratio for the first CSI feedback mode;
channel information used for transmitting the CSI indication information;
a resource used for transmitting the CSI indication information; or
a resource mapping mode used for transmitting the CSI indication information.

56. The terminal device of claim 54 or 55, wherein the CSI encoding type comprises at least one of:
a type of CSI compression encoding and/or a type of channel encoding;
a type of joint encoding, wherein the joint encoding is used for processing the first CSI into CSI indication information that does not require channel encoding;
a CSI encoding type g corresponding to one or more compression bit lengths;
a CSI encoding type corresponding to one or more compression bit lengths and not requiring channel encoding; or
second indication information, wherein the second indication information indicates that channel encoding is not required.

57. The terminal device of any one of claims 54 to 56, wherein the transmission type for the CSI indication information comprises at least one of:
a channel encoding type for uplink control information (UCI) used for transmitting the CSI indication information;
whether the UCI contains other information other than the CSI indication information; or
a channel encoding type for a physical uplink shared channel (PUSCH) used for transmitting the CSI indication information.

58. The terminal device of any one of claims 54 to 57, wherein the CSI information type comprises at least one of:
feedback precision for the CSI indication information;
a feedback overhead size for the CSI indication information;
a time-domain configuration requirement for the CSI indication information; or
a latency requirement for the CSI indication information.

59. The terminal device of any one of claims 54 to 58, wherein the CSI information type is used for determining at least one of: the parameter configuration for the first CSI feedback mode, the CSI encoding type, or the transmission type for the CSI indication information.

60. The terminal device of any one of claims 49 to 59, wherein the first CSI feedback mode comprises:
CSI compression encoding and/or channel encoding; or
joint encoding, wherein the joint encoding is used for processing the first CSI into CSI indication information that does not require channel encoding.

61. A network device, comprising:
a memory configured to store a computer program;
a transceiver configured to communicate with other devices; and
a processor configured to invoke and execute the computer program stored in the memory, to cause the network device to determine a first channel state information (CSI) feedback mode, receive CSI indication information from a terminal device, and obtain second CSI by processing the CSI indication information based on a decoding mode corresponding to the first CSI feedback mode.

62. The network device of claim 61, wherein the first CSI feedback mode is configured by the network device.

63. The network device of claim 61 or 62, wherein the processor is further configured to cause the network device to receive first indication information from the terminal device, wherein the first indication information indicates at least one CSI feedback mode and/or capability information of the terminal device for the at least one CSI feedback mode, wherein the at least one CSI feedback mode and/or the capability information is used by the network device to determine the first CSI feedback mode.

64. The network device of claim 63, wherein the at least one CSI feedback mode comprises at least one of:
a CSI feedback mode requested or recommended by the terminal device;
a CSI feedback mode supported by the terminal device; or
the first CSI feedback mode.

65. The network device of claim 61, wherein the first CSI feedback mode is specified in a protocol.

66. The network device of any one of claims 61 to 65, wherein the first CSI feedback mode is configured based on at least one of:
a parameter configuration for the first CSI feedback mode;
a CSI encoding type;
a transmission type for the CSI indication information; or
a CSI information type.

67. The network device of claim 66, wherein the parameter configuration for the first CSI feedback mode comprises at least one of:
an identifier (ID) of the CSI encoding type for the first CSI feedback mode;
a target compression bit for the first CSI feedback mode;
a compression ratio of CSI encoding for the first CSI feedback mode;
channel information used for transmitting the CSI indication information;
a resource used for transmitting the CSI indication information; or
a resource mapping mode used for transmitting the CSI indication information.

68. The network device of claim 66 or 67, wherein the CSI encoding type comprises at least one of:
a type of CSI compression encoding and/or a type of channel encoding;
a type of joint encoding, wherein the joint encoding is used for processing CSI original information into CSI indication information that does not require channel encoding;
a CSI encoding type corresponding to one or more compression bit lengths;
a CSI encoding type corresponding to one or more compression bit lengths and not requiring channel encoding; or
second indication information, wherein the second indication information indicates that channel encoding is not required.

69. The network device of any one of claims 66 to 68, wherein the transmission type for the CSI indication information comprises at least one of:
a channel encoding type for uplink control information (UCI) used for transmitting the CSI indication information;
whether the UCI contains other information other than the CSI indication information; or
a channel encoding type for a physical uplink shared channel (PUSCH) used for transmitting the CSI indication information.

70. The network device of any one of claims 66 to 69, wherein the CSI information type comprises at least one of:
feedback precision for the CSI indication information;
a feedback overhead size for the CSI indication information;
a time-domain configuration requirement for the CSI indication information; or
a latency requirement for the CSI indication information.

71. The network device of any one of claims 66 to 70, wherein the CSI information type is used for determining at least one of: the parameter configuration for the first CSI feedback mode, the CSI encoding type, or the transmission type for the CSI indication information.

72. The network device of any one of claims 61 to 71, wherein the first CSI feedback mode comprises:
CSI compression encoding and/or channel encoding; or
joint encoding, wherein the joint encoding is used for processing CSI original information into CSI indication information that does not require channel encoding.

73. A chip, comprising:
a processor configured to invoke and execute a computer program stored in a memory, to cause a device equipped with the chip to perform the method of any one of claims 1 to 12.

74. A chip, comprising:
a processor configured to invoke and execute a computer program stored in a memory, to cause a device equipped with the chip to perform the method of any one of claims 13 to 24.

75. A computer-readable storage medium configured to store a computer program which, when executed by a device, causes the device to perform the method of any one of claims 1 to 12.

76. A computer-readable storage medium configured to store a computer program which, when executed by a device, causes the device to perform the method of any one of claims 13 to 24.

77. A computer program product comprising computer program instructions that cause a computer to perform the method of any one of claims 1 to 12.

78. A computer program product comprising computer program instructions that cause a computer to perform the method of any one of claims 13 to 24.

79. A computer program being operable with a computer to perform the method of any one of claims 1 to 12.

80. A computer program being operable with a computer to perform the method of any one of claims 13 to 24.

81. A communication system, comprising:
a terminal device configured to perform the method of any one of claims 1 to 12; and
a network device configured to perform the method of any one of claims 13 to 24.
